# EUROPEAN PATENT SPECIFICATION

(11) **EP 2 942 547 B1**
(45) Date of publication and mention of the grant of the patent: **06.06.2018**
(21) Application number: 15380015.6
(22) Date of filing: 24.04.2015
(51) Int. Cl.: F16H 25/20, B65B 59/00, B65B 3/02, B65B 9/08

(54) **AUTOMATIC FORMAT-CHANGING DEVICE FOR AN AUTOMATIC HORIZONTAL FLEXIBLE CONTAINER FORMING AND FILLING MACHINE**
FORMATWECHSELVORRICHTUNG FÜR EINE HORIZONTALE AUTOMATISCHE FORM- UND FÜLLMASCHINE FÜR FLEXIBLE BEHÄLTER
DISPOSITIF DE CHANGEMENT DE FORMAT POUR UNE MACHINE DE REMPLISSAGE ET DE FORMAGE AUTOMATIQUE DE RÉCIPIENTS FLEXIBLES HORIZONTAUX

(30) Priority: 05.05.2014 ES 201430650
(43) Date of publication of application: 11.11.2015
(73) Proprietor: Mespack, S.L., 08130 Santa Perpètua de Mogoda (Barcelona) (ES)
(72) Inventor: Mora Flores, Francisco, 08100 Mollet del Vallès (Barcelona) (ES); Fité Sala, Menna, 08130 Santa Perpètua de Mogoda (Barcelona) (ES); Marti Roche, Enric, 08950 Esplugues de Llobregat (Barcelona) (ES)
(74) Representative: Juncosa Miro, Jaime

(56) References cited:
- EP-A2- 0 806 378
- WO-A2-03/041946
- JP-A- H01 193 138
- US-A- 2 556 572
- US-A- 2 611 280
- US-A- 3 554 353
- US-A- 4 782 715
- US-A- 4 977 788

## Description

### Field of the Art

The present invention relates to an automatic format-changing device for an automatic horizontal flexible container forming and filling machine comprising automatic means for positioning different operative units along a container forming section of the machine according to different flexible container formats to be produced.

### Background of the Invention

Automatic horizontal flexible container forming and filling machines are known to essentially comprise a web feeding section feeding a web of flexible heat-seal film from a reel, a container forming section in which individual flexible containers are formed from said web of flexible film, a filling section in which the individual flexible containers are filled with one or more products, and a closing section in which the filled flexible containers are closed and delivered to an output conveyor.

In the container forming section, a double-layer continuous web of flexible heat-seal film is moved in a horizontal forward movement direction through successive operative units making vertical weld beads and lower horizontal weld beads in the continuous web, optionally placing zipper-type closure elements or closure elements with a cap by welding, cooling the welds, and making notches and/or punching, before the flexible containers are finally separated by means of an operation of cutting the continuous web in relation to the vertical welds.

Vertical welding units, lower horizontal welding units, closure element placement units, cooling units and punching units can therefore be mentioned as examples of operative units. In some automatic horizontal flexible container forming and filling machines, the container forming section can include up to ten or more such operative units arranged successively along same. The operative units are positioned at distances from one another selected according to the flexible container format that is being produced. When another different flexible container format is to be produced, all the operative units must be repositioned according to the new format.

Automatic horizontal flexible container forming and filling machines are known to be provided with an automatic format-changing device comprising a framing arranged along the container forming section, guide rails fixed to said framing, a plurality of support carriages, each foreseen for holding one of the operative units, guide followers fixed to said support carriages and slidingly coupled to said guide rails, and locking means for fixing each support carriage with respect to the framing in a position selected according to a predetermined flexible container format to be produced. By means of this automatic format-changing device, the support carriages supporting the different operative units are manually moved along the guide rails and fixed in the desired positions by the locking means.

Nevertheless, one drawback of this automatic format-changing device of the prior art is that manual positioning of support carriages to adapt the container forming section to a new format requires significant labor time, and furthermore provides a low level of positioning precision. A device for simultaneously adjusting components in a machine is disclosed in US 4,977,788.

### Disclosure of the Invention

The present invention contributes to solving the foregoing and other drawbacks by providing an automatic format-changing device for an automatic horizontal flexible container forming and filling machine conventionally comprising a framing, guide rails fixed to said framing, a plurality of support carriages foreseen for holding respective operative units, guide followers fixed to said support carriages and slidingly coupled to said guide rails, and locking means for fixing each support carriage with respect to the framing in a position selected according to a predetermined flexible container format to be produced.

The automatic format-changing device of the present invention further comprises a screw spindle parallel to the guide rails rotatably installed in the framing, a motor unit operatively connected for rotating said screw spindle, a plurality of nuts, each coupled to the screw spindle and installed such that it can rotate but not move axially in a coupling support attached to each support carriage, and a clutch element movably installed in each support carriage and moved by a clutch actuator between a clutch position, in which said clutch element interferes with said nut blocking rotation of the nut with respect to said coupling support, and a release position, in which the clutch element allows free rotation of the nut with respect to the coupling support.

Therefore, when the clutch element is kept in the clutch position by the clutch actuator and the screw spindle is rotating due to the action of the motor unit, the nut cannot rotate with respect to its coupling support and is moved along the screw spindle shifting the support carriage with it.

When the clutch element is moved to the release position by the clutch actuator, the nut, which is installed in the coupling support by means of rolling bearings supporting a radial load and an axial load, can rotate freely together with the screw spindle in the coupling support, whereby the support carriage is stopped in the desired position and can be fixed to the framing in this desired position by the locking means even though the screw spindle continues to rotate due to the action of the motor unit.

In one embodiment, the nut has an outer peripheral toothing and the clutch element has at least one tooth configured for engaging in said outer peripheral toothing of the nut. For example, the clutch element has the shape of a pivoting lever with a first end connected in an articulated manner to the coupling support by a hinge pin and a second end connected to a moving part of said clutch actuator, which can be a pneumatic actuator, for example.

In one embodiment, the mentioned locking means for fixing each support carriage with respect to the framing comprise a locking actuator, which can be a pneumatic actuator, for example, operatively connected for moving a brake shoe installed in each support carriage in a position facing a retaining surface of the framing. The brake shoe is moved by the locking actuator between a locking position, in which said brake shoe is pressed against said retaining surface immobilizing the support carriage with respect to the framing, and a release position, in which the brake shoe does not interfere with the retaining surface and allows movement of the support carriage with respect to the framing.
manner to the coupling support by a hinge pin and a second end connected to a moving part of said clutch actuator, which can be a pneumatic actuator, for example.

In one embodiment, the mentioned locking means for fixing each support carriage with respect to the framing comprise a locking actuator, which can be a pneumatic actuator, for example, operatively connected for moving a brake shoe installed in each support carriage in a position facing a retaining surface of the framing. The brake shoe is moved by the locking actuator between a locking position, in which said brake shoe is pressed against said retaining surface immobilizing the support carriage with respect to the framing, and a release position, in which the brake shoe does not interfere with the retaining surface and allows movement of the support carriage with respect to the framing.

The automatic format-changing device of the present invention preferably comprises detection means for detecting the position of each support carriage in relation to the framing. In one embodiment, these detection means comprise a magnetic element, such as a permanent magnet, for example, supported in each support carriage and a linear magnetic detector supported in the framing and arranged parallel to the guide rails for detecting the position of said magnetic element, and accordingly of the support carriage, in relation to the framing.

The mentioned motor unit rotating the screw spindle preferably comprises an electronically controllable electric servomotor. The mentioned clutch and locking actuators are also preferably electronically controllable. Therefore, by means of suitable electronic control of the motor unit, clutch actuators and locking actuators in cooperation with position signals emitted by linear magnetic detectors, it is possible to simultaneously or sequentially reposition all the support carriages, and accordingly all the operative units supported in the support carriages, in a relatively fast and automatic manner according to format data stored in a memory or entered by means of a user interface in order to adapt the container forming section to flexible containers having different formats.

### Brief Description of the Drawings

The foregoing and other features and advantages will be better understood based on the following detailed description of a merely illustrative and non-limiting embodiment with reference to the accompanying drawings, in which:

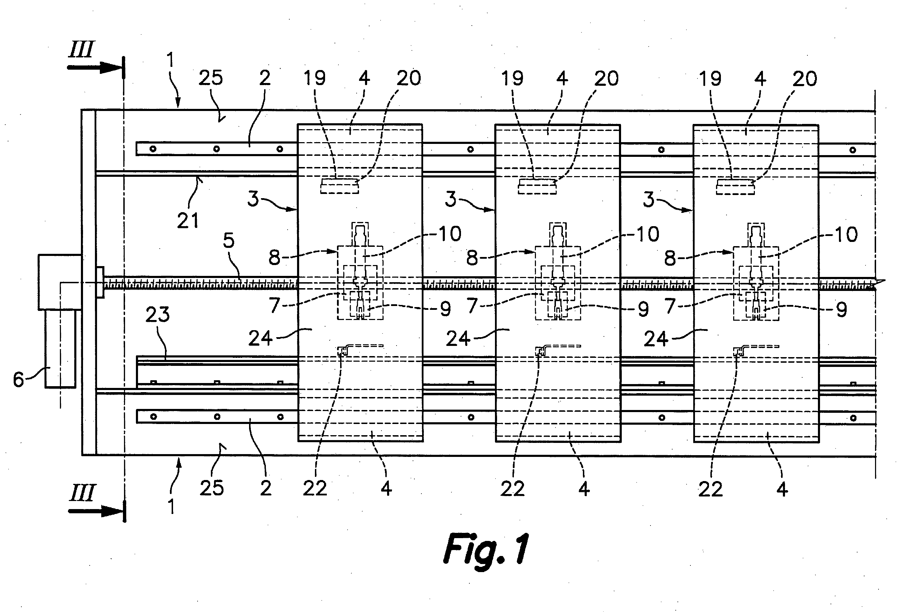

Figure 1 is a top view of an automatic format-changing device for an automatic horizontal flexible container forming and filling machine according to one embodiment of the present invention;

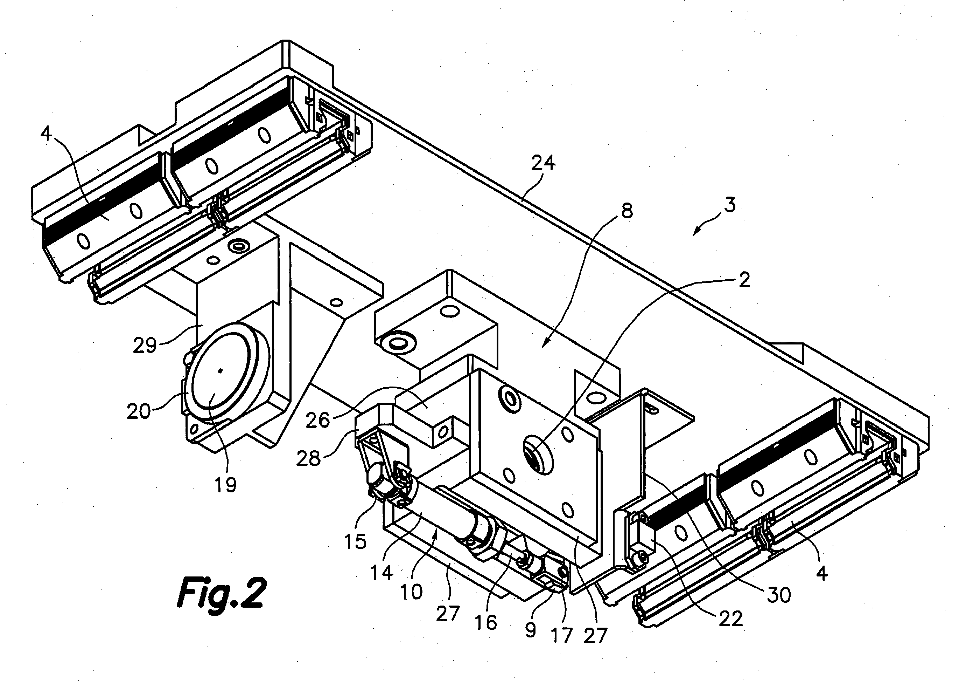

Figure 2 is a perspective view showing a lower part of one of the support carriages of the automatic format-changing device of Figure 1;
Figure 3 is a cross-section view taken along plane III-III of Figure 1;
Figure 4 is a cross-section view taken along plane IV-IV of Figure 3; and
Figure 5 is a cross-section view taken along plane V-V of Figure 4.

### Detailed Description of an Exemplary Embodiment

Making reference to the drawings, there is shown an automatic format-changing device for an automatic horizontal flexible container forming and filling machine according to one embodiment of the present invention, which comprises a framing 1 providing two separate support surfaces 25 in which respective guide rails 2 are fixed. A trapezoidal toothed screw spindle 5 arranged parallel to the guide rails 2 is rotatably installed in the framing 1 between the two support surfaces 25, and a motor unit 6, which preferably comprises an electric servomotor, is operatively connected for rotating the screw spindle 5.

A plurality of support carriages 3 is arranged along the framing 1. Each carriage 3 comprises a platform 24 provided for holding a respective operative unit (not shown) fixed thereon,. The operative units can, for example, be selected from vertical welding units, lower horizontal welding units, closure element placement units, cooling units, and cutting units included in a container forming section of the automatic horizontal flexible container forming and filling machine.

Each of the support carriages 3 has guide followers 4 fixed in a lower part of the platform 24. The guide followers 4 are slidingly coupled to said guide rails 2 in an operative situation. Therefore, the support carriages 3 can slide individually and in a guided manner along the framing 1. Also, the platform 24 of each support carriage 3 has fixed thereto on its lower part a coupling support 8 in which a corresponding nut 7 is installed. The nut 7 is coupled to the screw spindle 5 in an operative situation.

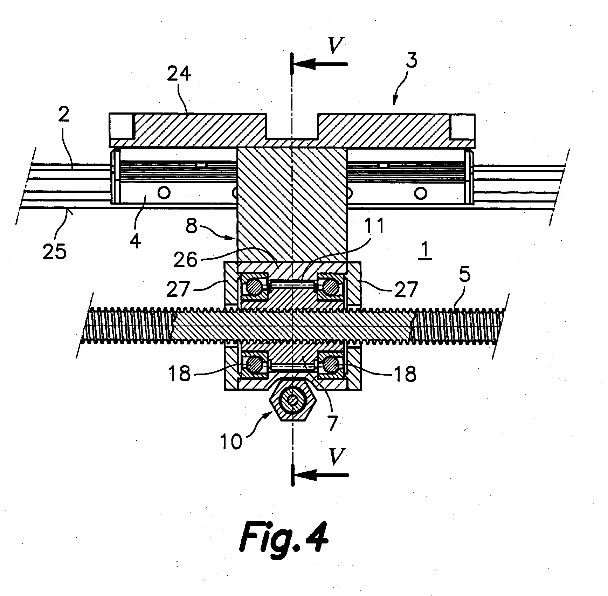

The nut 7 is installed in the coupling support 8 such that it can rotate but not move axially with respect to the corresponding support carriage 3. To that end, the coupling support 8 comprises a bearing pedestal body 26 (Figure 4) having seats on which outer rings of rolling bearings 18 are seated, and the nut 7 has seats on which inner rings of said rolling bearings 18 are seated. Side covers 27 fixed to the bearing pedestal body 26 retain the rolling bearings 18 in the axial direction. The rolling bearings 18 are rigid ball bearings, for example, suitable for supporting radial loads and axial loads.

The coupling support 8 of each support carriage 3 has a clutch element 9 which has the shape of a pivoting lever having a first end connected in an articulated manner to the coupling support 8, and more specifically to the bearing pedestal body 26, by a hinge pin 13. The nut 7 has an outer peripheral toothing 11 formed thereon between the two seats of the rolling bearings 18, and the clutch element 9 has a tooth 12 configured for engaging between any two teeth of said outer peripheral toothing 11 of the nut 7.

The coupling support 8, and more specifically the bearing pedestal body 26, has fixed thereto an actuator support 28 in which there is supported a clutch actuator 10, which in the illustrated embodiment is a pneumatic actuator comprising a cylinder 14 connected in an articulated manner to the actuator support 28 by a hinge pin 15 and a moving rod 16 having an end connected to a piston arranged inside the cylinder 14 and another end connected in an articulated manner to a second end of the clutch element 9 by a hinge pin 17.

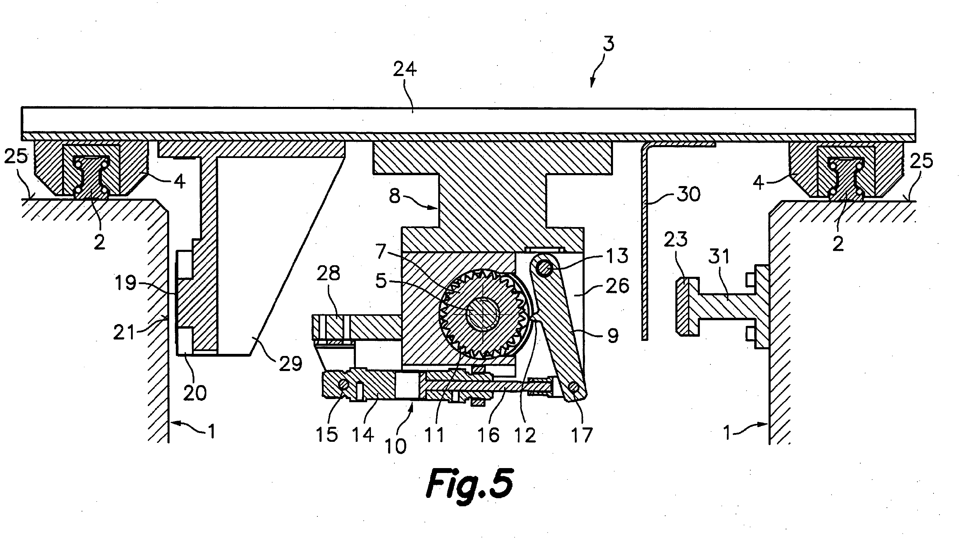

Activation of the clutch actuator 10 in one direction or another moves the clutch element 9 between a clutch position (not shown), in which said tooth 12 of the clutch element 9 interferes with the outer peripheral toothing 11 of the nut 7, blocking rotation of the nut 7 with respect to the coupling support 8, and a release position (Figure 5), in which the tooth 12 of the clutch element 9 is separated from the outer peripheral toothing 11 of the nut 7, allowing free rotation of the nut 7 with respect to the coupling support 8, and a release position (Figure 5), in which the tooth 12 of the clutch element 9 is separated from the outer peripheral toothing 11 of the nut 7, allowing free rotation of the nut 7 with respect to the coupling support 8.

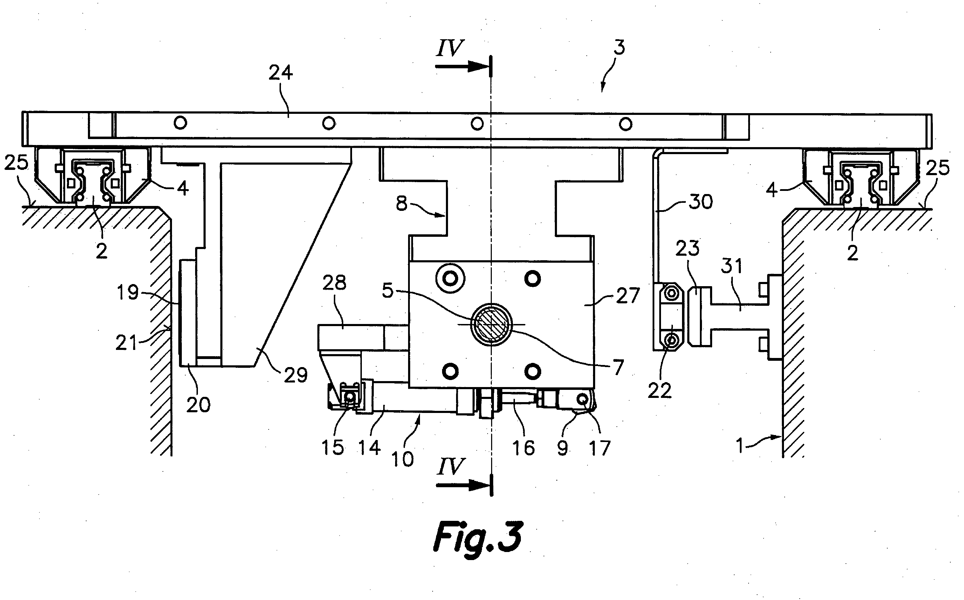

The automatic format-changing device includes locking means for fixing each support carriage 3 with respect to the framing 1 in a position selected according to a predetermined flexible container format to be produced. In the illustrated embodiment, these locking means comprise a brake shoe 19 installed in a locking support 29 fixed on the lower part of the platform 24 of each support carriage 3. A locking actuator 20 operatively connected for moving the brake shoe 19 between a locking position (not shown), in which said brake shoe 19 is pressed by the locking actuator 20 against a retaining surface 21 of the framing 1, and a release position (Figures 3 and 5), in which the brake shoe 19 is separated from said retaining surface 21 of the framing 1, is also installed in the locking support 29.

In the illustrated embodiment, the locking actuator 20 is a pneumatic actuator having a piston having a large diameter and short stroke, and the brake shoe 19 is a front surface of a moving member connected to the piston.

The automatic format-changing device furthermore includes detection means for detecting the position of each support carriage 3 in relation to the framing 1. In the illustrated embodiment, these detection means comprise a magnetic element 22, such as a permanent magnet, for example, supported in a detection support 30 fixed on the lower part of the platform 24 of each support carriage 3 in a position facing and adjacent to a linear magnetic detector 23 supported in a detector support 31 fixed to the framing 1 and arranged parallel to the guide rails 2. The linear magnetic detector 23 is configured for detecting the position of the magnetic element 22, and accordingly the position of the support carriage 3 in relation to the framing 1.

The scope of the present invention is defined in the attached claims.

## Claims

1. An automatic format-changing device for an automatic horizontal flexible container forming and filling machine comprising a framing (1), guide rails (2) fixed to said framing (1), a plurality of support carriages (3) provided for holding respective operative units, guide followers (4) fixed to said support carriages (3) and slidingly coupled to said guide rails (2), locking means for fixing each support carriage (3) with respect to the framing (1) in a position selected according to a predetermined flexible container format to be produced, a screw spindle (5) parallel to the guide rails (2) rotatably installed in the framing (1), a motor unit (6) operatively connected for rotating said screw spindle (5), a plurality of nuts (7), each coupled to the screw spindle (5) and installed such that it can rotate but not move axially in a coupling support (8) attached to each support carriage (3), and a clutch element (9) movably installed on each support carriage (3) and moved by a clutch actuator (10) between a clutch position, in which said clutch element (9) interferes with said nut (7) blocking rotation of the nut (7) with respect to said coupling support (8), and a release position, in which the clutch element (9) allows free rotation of the nut (7) with respect to the coupling support (8) **characterized in that** the nut (7) is installed in the coupling support (8) by means of rigid ball bearings (18) supporting radial loads and axial loads, wherein the coupling support (8) comprises a bearing pedestal body (26) having seats on which outer rings of the rigid ball bearings (18) are seated, and the nut (7) has seats on which inner rings of said rigid ball bearings (18) are seated, and wherein side covers (27) are fixed to the bearing pedestal body (26) retaining the bearings (18) in the axial direction.

2. The automatic format-changing device according to claim 1, **characterized in that** the nut (7) has an outer peripheral toothing (11) and the clutch element (9) has at least one tooth (12) configured for engaging in said outer peripheral toothing (11) of the nut (7).

3. The automatic format-changing device according to claim 2, **characterized in that** the clutch element (9) has a first end connected in an articulated manner to the coupling support (8) by a hinge pin (13) and a second end connected to a moving part of said clutch actuator (10).

4. The automatic format-changing device according to claim 2 or 3, **characterized in that** the clutch actuator (10) is a pneumatic actuator and comprises a cylinder (14) connected in an articulated manner to the coupling support (8) by a hinge pin (15) and a moving rod (16) connected in an articulated manner to said second end of the clutch element (9) by a hinge pin (17).

5. The automatic format-changing device according to claim 1, **characterized in that** said locking means comprise a brake shoe (19) installed on each support carriage (3) and moved by a locking actuator (20) between a locking position, in which said brake shoe (19) is pressed against a retaining surface (21) of the framing (1), and a release position, in which the brake shoe (19) does not interfere with said retaining surface (21) of the framing (1).

6. The automatic format-changing device according to claim 5, **characterized in that** said locking actuator (20) is a pneumatic actuator.

7. The automatic format-changing device according to claim 1, **characterized by** further comprising detection means for detecting the position of each support carriage (3) relative to the framing (1).

8. The automatic format-changing device according to claim 7, **characterized in that** said detection means comprise a magnetic element (22) supported in each support carriage (3) and a linear magnetic detector (23) supported in the framing (1) and arranged parallel to the guide rails (2) for detecting the position of said magnetic element (22) and of the support carriage (3) relative to the framing (1).

9. The automatic format-changing device according to claim 8, **characterized in that** the magnetic element (22) is a permanent magnet.

10. The automatic format-changing device according to claim 1, **characterized in that** said motor unit (6) comprises an electric servomotor.

## Patentansprüche

1. Automatische Formatwechselvorrichtung für eine horizontale automatische Form- und Füllmaschine für flexible Behälter, umfassend ein Gestell (1), Führungsschienen (2), welche an dem genannten Gestell (1) befestigt sind, eine Vielzahl von Tragschlitten (3), welche dafür bestimmt sind, jeweilige Betriebseinheiten zu halten, Führungsmitnehmer (4), welche an den genannten Tragschlitten (3) befestigt sind und mit den genannten Führungsschienen (2) gleitend gekoppelt sind, Blockierungsmittel zur Befestigung jedes Tragschlittens (3) in Bezug auf das Gestell (1) in einer Stellung, welche gemäß einem herzustellenden vorbestimmten flexiblen Behälterformat ausgewählt wird, eine Schraubenspindel (5), welche parallel zu den Führungsschienen (2) im Gestell (1) drehbar installiert ist, eine Motoreinheit (6), welche zum Drehen der genannten Schraubenspindel (5) betriebsfähig verbunden ist, eine Vielzahl von Muttern (7), welche jeweils mit der Schraubenspindel (5) gekoppelt sind und derart installiert sind, dass sie sich drehen können, aber sich nicht in einem Kopplungsträger (8), welcher mit jedem Tragschlitten (3) verbunden ist, axial bewegen können, und ein Kupplungselement (9), welches auf jedem Tragschlitten (3) beweglich installiert ist und von einem Kupplungsaktuator (10) zwischen einer Kupplungsstellung, in welcher das genannte Kupplungselement (9) die genannte Mutter (7) stört, indem die Drehung der Mutter (7) in Bezug auf den genannten Kopplungsträger (8) blockiert wird, und einer Freigabestellung, in welcher das Kupplungselement (9) die freie Drehung der Mutter (7) in Bezug auf den Kopplungsträger (8) erlaubt, bewegt wird, **dadurch gekennzeichnet, dass** die Mutter (7) im Kopplungsträger (8) mittels starrer Kugellager (18) installiert ist, sodass radiale Lasten und axiale Lasten getragen werden, wobei der Kopplungsträger (8) einen Lagerbockkörper (26) umfasst, welcher Sitzflächen aufweist, auf welchen Außenringe der starren Kugellager (18) gesetzt werden, und die Mutter (7) Sitzflächen aufweist, auf welchen Innenringe der genannten starren Kugellager (18) gesetzt werden, und wobei seitliche Abdeckungen (27) an dem Lagerbockkörper (26) befestigt sind, sodass die Lager (18) in Axialrichtung gesichert werden.

2. Automatische Formatwechselvorrichtung nach Anspruch 1, **dadurch gekennzeichnet, dass** die Mutter (7) eine äußere Umfangsverzahnung (11) aufweist und das Kupplungselement (9) mindestens einen Zahn (12) aufweist, welcher dazu ausgebildet ist, in die genannte äußere Umfangsverzahnung (11) der Mutter (7) einzugreifen.

3. Automatische Formatwechselvorrichtung nach Anspruch 2, **dadurch gekennzeichnet, dass** das Kupplungselement (9) ein erstes Ende, welches gelenkig mit dem Kopplungsträger (8) mittels eines Scharnierstifts (13) verbunden ist, und ein zweites Ende, welches mit einem beweglichen Teil des genannten Kupplungsaktuators (10) verbunden ist, aufweist.

4. Automatische Formatwechselvorrichtung nach Anspruch 2 oder 3, **dadurch gekennzeichnet, dass** der Kupplungsaktuator (10) ein pneumatischer Aktuator ist und einen Zylinder (14), welcher gelenkig mit dem Kopplungsträger (8) mittels eines Scharnierstifts (15) verbunden ist, und eine bewegliche Stange (16), welche gelenkig mit dem genannten zweiten Ende des Kupplungselements (9) mittels eines Scharnierstifts (17) verbunden ist, umfasst.

5. Automatische Formatwechselvorrichtung nach Anspruch 1, **dadurch gekennzeichnet, dass** die genannten Blockierungsmittel einen Bremsschuh (19) umfassen, welcher auf jedem Tragschlitten (3) installiert ist und von einem Blockierungsaktuator (20) zwischen einer Blockierungsstellung, in welcher der genannte Bremsschuh (19) gegen eine Haltefläche (21) des Gestells (1) gedrückt wird, und einer Freigabestellung, in welcher der Bremsschuh (19) die genannte Haltefläche (21) des Gestells (1) nicht stört, bewegt wird.

6. Automatische Formatwechselvorrichtung nach Anspruch 5, **dadurch gekennzeichnet, dass** der genannte Blockierungsaktuator (20) ein pneumatischer Aktuator ist.

7. Automatische Formatwechselvorrichtung nach Anspruch 1, **dadurch gekennzeichnet, dass** sie zusätzlich Ermittlungsmittel umfasst, um die Stellung jedes Tragschlittens (3) bezüglich des Gestells (1) zu ermitteln.

8. Automatische Formatwechselvorrichtung nach Anspruch 7, **dadurch gekennzeichnet, dass** die genannten Ermittlungsmittel ein magnetisches Element (22), welches in jedem Tragschlitten (3) getragen wird, und einen geradlinigen Magnetdetektor (23), welcher im Gestell (1) getragen wird und parallel zu den Führungsschienen (2) angeordnet ist, um die Stellung des genannten magnetischen Elements (22) und des Tragschlittens (3) bezüglich des Gestells (1) zu ermitteln, umfassen.

9. Automatische Formatwechselvorrichtung nach Anspruch 8, **dadurch gekennzeichnet, dass** das magnetische Element (22) ein Dauermagnet ist.

10. Automatische Formatwechselvorrichtung nach Anspruch 1, **dadurch gekennzeichnet, dass** die genannte Motoreinheit (6) einen elektrischen Servomotor umfasst.

## Revendications

1. Un dispositif pour le changement automatique de format pour une machine automatique pour former et remplir un récipient flexible horizontal comportant un bâti (1), des glissières de guidage (2) fixées sur ce bâti (1), une pluralité de chariots de support (3) prévus pour soutenir les unités de commande respectives, des suiveurs de guide (4) fixés sur ces chariots de support (3) et couplés glissants sur ces glissières de guidage (2), des moyens de verrouillage pour fixer chaque chariot de support (3) par rapport au bâti (1) dans une position sélectionnée conformément à un format de récipient flexible prédéterminé à fabriquer, une broche à vis (5) parallèle aux glissières de guidage (2) installée rotatoire sur le bâti (1), une unité de moteur (6) reliée fonctionnellement pour faire tourner cette broche à vis (5), une pluralité d'écrous (7), chacun couplé à la broche à vis (5) et installés de sorte à ce qu'ils puissent tourner mais ne pas bouger axialement sur un support de couplage (8) fixé à chaque chariot de support (3) et un élément d'embrayage (9) installé mobile sur chaque chariot de support (3) et déplacé par un actionneur d'embrayage (10) entre une position d'embrayage, dans laquelle cet élément d'embrayage (9) interfère avec la rotation de verrouillage de cet écrou (7) de l'écrou (7) par rapport à ce support de couplage (8) et une position de dégagement, dans laquelle l'élément d'embrayage (9) permet la libre rotation de l'écrou (7) par rapport au support de couplage (8) **caractérisé en ce que** l'écrou (7) est installé dans le support de couplage (8) au moyen de roulements à bille (18) rigides supportant des charges radiales et des charges axiales, où le support de couplage (8) comporte un corps de socle de support (26) ayant des surfaces d'appui sur lesquelles sont appuyées des bagues extérieures des roulements à bille rigides (18) et l'écrou (7) a des surfaces d'appui sur lesquelles sont appuyées des bagues intérieures de ces roulements à bille rigides (18) et où des couvercles latéraux (27) sont fixés au socle de support (26) retenant les roulements (18) dans la position axiale.

2. Le dispositif de changement automatique de format conformément à la revendication 1, **caractérisé en ce que** l'écrou (7) possède une denture périphérique extérieure (11) et l'élément d'embrayage (9) possède au moins une dent (12) configurée pour être engagée dans cette denture périphérique extérieure (11) de l'écrou (7).

3. Le dispositif de changement automatique de format conformément à la revendication 2, **caractérisé en ce que** l'élément d'embrayage (9) possède une première extrémité reliée de façon articulée au support de couplage (8) par une broche de charnière (13) et une deuxième extrémité reliée à une partie mobile de cet actionneur d'embrayage (10).

4. Le dispositif de changement automatique de format conformément à la revendication 2 ou 3, **caractérisé en ce que** l'actionneur d'embrayage (10) est un actionneur pneumatique et comporte un cylindre (14) relié de façon articulée au support de couplage (8) par une broche de charnière (15) et une tige mobile (16) reliée de façon articulée à cette deuxième extrémité de l'élément d'embrayage (9) par une broche de charnière (17).

5. Le dispositif de changement automatique de format conformément à la revendication 1, **caractérisé en ce que** ces moyens de verrouillage comportent un sabot de frein (19) installé sur chaque chariot de support (3) et déplacé par un actionneur de verrouillage (20) entre une position de verrouillage , dans laquelle ce sabot de frein (19) est pressé contre une surface de rétention (21) du bâti (1) à une position de dégagement, dans laquelle le sabot de frein (19) n'interfère pas avec cette surface de rétention (21) du bâti (1).

6. Le dispositif de changement automatique de format conformément à la revendication 5, **caractérisé en ce que** cet actionneur de verrouillage (20) est un actionneur pneumatique.

7. Le dispositif de changement automatique de format conformément à la revendication 1, **caractérisé en ce qu'**il comporte de plus des moyens de détection pour détecter la position de chaque chariot de support (3) par rapport au bâti (1).

8. Le dispositif de changement automatique de format conformément à la revendication 7, **caractérisé en ce que** ces moyens de détection comportent un élément magnétique (22) supporté sur chaque chariot de support (3) et un détecteur magnétique linéal (23) supporté sur le bâti (1) et disposé parallèle aux glissières de guidage (2) pour détecter la position de cet élément magnétique (22) et le chariot de support (3) par rapport au bâti (1).

9. Le dispositif de changement automatique de format conformément à la revendication 8, **caractérisé en ce que** l'élément magnétique (22) est un aimant permanent.

10. Le dispositif de changement automatique de format conformément à la revendication 1, **caractérisé en ce que** cette unité de moteur (6) comporte un servomoteur électrique.
